(19) Europäisches Patentamt / European Patent Office / Office européen des brevets

(11) **EP 1 804 199 B1**

(12) **FASCICULE DE BREVET EUROPEEN**

(45) Date de publication et mention
de la délivrance du brevet:
**06.04.2011 Bulletin 2011/14**

(51) Int Cl.:
**G06K 19/073** (2006.01)

(21) Numéro de dépôt: **06126561.7**

(22) Date de dépôt: **19.12.2006**

(54) **Détecteur de pics parasites dans l'alimentation d'un circuit intégré**

Detektor von Störungspeaks bei der Stromzufuhr zu einem integrierten Schaltkreis

Detector of disturbance peaks in the power supply of an integrated circuit

(84) Etats contractants désignés:
**DE FR GB IT**

(30) Priorité: **20.12.2005 FR 0553962**

(43) Date de publication de la demande:
**04.07.2007 Bulletin 2007/27**

(73) Titulaire: **ST MICROELECTRONICS S.A.**
**92120 Montrouge (FR)**

(72) Inventeurs:
• **Malherbe, Alexandre**
**13530 Trets (FR)**
• **Duval, Benjamin**
**83470 Saint-Maximin (FR)**

(74) Mandataire: **de Beaumont, Michel**
**1bis, rue Champollion**
**38000 Grenoble (FR)**

(56) Documents cités:
EP-A- 1 293 856         WO-A-00/10124
WO-A-98/50859         DE-A1- 10 120 147
US-A1- 2003 226 082

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

Domaine de l'invention

La présente invention concerne, de façon générale, les circuits électroniques et, plus particulièrement, la détection de perturbations accidentelles ou volontaires dans l'alimentation d'un circuit électronique. L'invention s'applique plus particulièrement à la détection de telles perturbations dans le cadre d'attaques par injection de fautes dans l'exécution de programmes ou d'algorithmes par le circuit.

Exposé de l'art antérieur

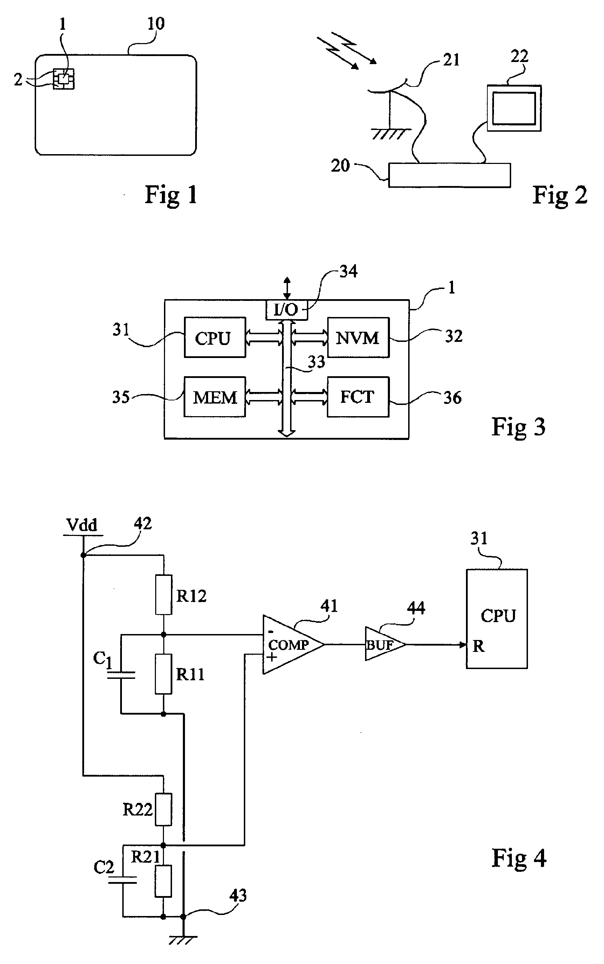

La figure 1 représente, de façon très schématique, un exemple de carte à puce 10 du type auquel s'applique à titre d'exemple la présente invention. Une telle carte est le plus souvent constituée d'un support en matière plastique sur ou dans lequel est rapportée une puce 1 de circuit intégré associée à des contacts 2 de communication avec un terminal (non représenté), ou à des éléments d'émission-réception radiofréquence pour une communication sans contact.

La figure 2 représente, de façon très schématique et sous forme de blocs, un deuxième exemple d'application de la présente invention à un récepteur 20 de signaux diffusés de façon contrôlée, par exemple un décodeur de signaux de télévision reçu par une antenne satellite 21 pour affichage sur un écran 22 de type écran de télévision. Le décodage des émissions reçues est subordonné à des droits d'accès gérés par le décodeur 20 (par exemple de type connu sous la dénomination Set Top Box). Dans certains cas, le décodeur 20 comporte un lecteur de carte à puce 10 du type de celle illustrée par la figure 1 dont le circuit intégré 1 contient les droits d'accès (plus précisément un identifiant et généralement une clé de chiffrement) nécessaires au décodage correct des émissions. Dans d'autres cas, des circuits intégrés (non représentés) internes au décodeur 20 comportent des éléments de gestion des droits d'accès (notamment, de déchiffrement).

La figure 3 représente, de façon très schématique et sous forme de blocs, un exemple classique de microcontrôleur 1, par exemple d'une carte à puce, auquel s'applique à titre d'exemple la présente invention. Un tel circuit comporte une unité centrale de traitement 31 (CPU) susceptible d'exécuter les programmes le plus souvent contenus dans une mémoire non volatile 32 (NVM), par exemple de type ROM ou EEPROM, avec laquelle elle communique au moyen d'un ou plusieurs bus 33. Le ou les bus 33 véhiculent des signaux (d'adresse, de commande et de données) entre les différents éléments du circuit 1 et entre tout ou partie de ces éléments et une interface 34 d'entrée/sortie (I/O) pour communiquer avec ou sans contact avec l'extérieur. Le plus souvent, des éléments de mémorisation volatile 35 (MEM) de type RAM et/ou de type registres sont contenus dans le circuit 1. D'autres fonctions (bloc 36, FCT) peuvent être également être intégrées au circuit 1 en fonction de l'application. Par exemple, de telles fonctions peuvent comporter une cellule de chiffrement, une cellule de vérification d'intégrité, etc.

Le circuit 10 manipule des quantités numériques (qu'il s'agisse d'instructions de programme ou de données) qui, dans les applications que vise la présente invention, conditionnent l'accès à certaines informations (par exemple des programmes télédiffusés). Il peut s'agir de clés secrètes d'algorithmes de chiffrement, de codes secrets d'authentification, d'étapes d'algorithmiques d'un programme, etc.

Différentes attaques sont susceptibles d'être mises en oeuvre pour tenter de percer les secrets du circuit intégré ou de rendre inopérante une protection de données traitées, en examinant les signaux d'entrée/sortie et/ou la consommation du circuit ou tout autre grandeur influencée par son fonctionnement. En particulier, des attaques dites par injection de fautes consistent à provoquer une perturbation dans le fonctionnement du circuit intégré 1 lors de l'exécution d'un algorithme de cryptographie ou de décodage et à interpréter le fonctionnement ultérieur du circuit pour tenter de découvrir les quantités secrètes. Plus simplement, la perturbation peut engendrer un saut dans un programme visant à ne pas exécuter des instructions susceptibles d'interdire l'accès à des données.

La perturbation la plus répandue dans les attaques par injection de fautes est une perturbation sur l'alimentation du circuit (glitch attack) consistant à provoquer un pic parasite de durée très brève dans l'alimentation du circuit.

Pour tenter de contrer de telles attaques, les circuits intégrés comportent des outils logiciels et/ou matériels réagissant à une perturbation dans le fonctionnement du circuit (contre mesure), de façon à bloquer le fonctionnement du circuit, empêcher la sortie d'informations confidentielles, rendre inexploitable un résultat d'un calcul, etc. lorsqu'une tentative de fraude est détectée.

Parmi ces outils, la présente invention concerne plus particulièrement les détecteurs de perturbations de l'alimentation d'un circuit, par exemple, agissant directement sur le circuit en réinitialisant l'unité centrale interdisant ainsi au pirate éventuel de tirer profit de la perturbation.

Le besoin de détecteur de pics parasites d'alimentation provient notamment de l'imperfection des régulateurs de tension dont sont le plus souvent équipés les circuits électroniques en raison des besoins de miniaturisation qui empêchent d'utiliser des condensateurs de filtrage de taille suffisante.

La figure 4 représente, de façon très schématique et sous forme de blocs, un exemple classique de circuit de détection de pics parasites dans l'alimentation d'un circuit électronique. Ce détecteur est basé sur un comparateur de tension 41 (COMP) dont les deux entrées reçoivent une tension proportionnelle à la tension d'alimentation Vdd après filtrage par des circuits résistifs et capacitifs présentant des constantes de temps différentes. Des diviseurs de tension (résistances R11 et R12 en série et résistances R21 et R22 en série) entre une borne 42 d'application du potentiel Vdd et la masse 43 sont couplés aux deux bornes d'entrée (- et +) du comparateur 41, un condensateur C1, respectivement C2 reliant l'entrée correspondante du comparateur (point milieu du pont résistif associé) à la masse pour constituer la cellule de filtrage. La sortie du comparateur 41 traverse un élément 44 adaptateur de niveau (BUF) dont la sortie est reliée à une borne R de réinitialisation de l'unité centrale 31. Le circuit de la figure 4 est décrit, par exemple, dans le document US-A-2003/0226082. Les valeurs données aux cellules de filtrage définissent des constantes de temps différentes pour détecter un parasite d'alimentation.

Un inconvénient du circuit de la figure 4 est qu'il ne permet pas de détecter des pics parasites rapides sur l'alimentation. Or, de plus en plus, les attaques par pics parasites exploitent des durées de pics très faibles (inférieures à une centaine de nanosecondes). Les limites du circuit de la figure 4 proviennent non seulement des filtrages opérés sur les deux entrées du comparateur 41, mais également de la structure même de ce comparateur, basée sur une structure d'amplificateur opérationnel. Une telle structure est par ailleurs complexe.

Un autre inconvénient de la solution décrite en relation avec la figure 4, là encore aggravée par la structure interne du comparateur, est que le circuit devient encore plus complexe pour détecter à la fois des pics parasites positifs et négatifs.

Le document DE-A-10120147 (ou US 6 751 079) décrit un détecteur de pics parasites basé sur un comparateur dont une entrée positive reçoit une tension de mesure prélevée sur un pont diviseur résistif recevant la tension d'alimentation et dont l'entrée inverseuse reçoit un potentiel de référence par l'intermédiaire d'un transistor dont la borne de commande est couplée par un élément capacitif à la tension d'alimentation et dont l'autre borne de conduction est couplée au pont diviseur résistif.

Le document WO-A-98/50859 décrit un autre type de détecteur de pics parasites utilisant trois transistor pour fournir le résultat de la détection.

Le document EP-A-1293856 décrit encore un autre détecteur de pics parasites multi-transistors pour effectuer la comparaison.

Résumé de l'invention

La présente invention vise à pallier tout ou partie des inconvénients connus des détecteurs de pics parasites d'alimentation d'un circuit intégré.

L'invention vise plus particulièrement un détecteur rapide, capable de détecter des pics parasites de faibles durées (inférieures à la centaine de nanosecondes).

L'invention vise également une solution simple et peu encombrante dans le circuit intégré.

L'invention vise également une solution compatible avec une détection de pics parasites positifs et/ou négatifs.

Pour atteindre tout ou partie des objets ainsi que d'autres, la présente invention prévoit un circuit de détection de pics parasites sur l'alimentation d'un circuit électronique, comportant au moins un premier transistor dont la borne de commande est reliée à une borne d'application d'un premier potentiel d'une tension d'alimentation du circuit et dont une première borne de conduction est reliée à une borne d'application d'un deuxième potentiel par l'intermédiaire d'au moins un premier élément résistif, la deuxième borne de conduction du premier transistor fournissant le résultat de la détection.

Selon un mode de réalisation de la présente invention, un premier élément capacitif relie ladite première borne de conduction à une borne d'application d'un potentiel de référence de la tension d'alimentation, les valeurs respectives du premier élément résistif et du premier élément capacitif étant choisies en fonction de la durée minimale des pics parasites à détecter.

Selon un mode de réalisation de la présente invention, un deuxième élément résistif forme, avec ledit premier élément résistif, un pont diviseur de tension dont une borne intermédiaire est connectée à ladite première borne de conduction du premier transistor.

Selon un mode de réalisation de la présente invention, un troisième élément résistif relie ladite borne intermédiaire à la première borne de conduction du premier transistor.

Selon un mode de réalisation de la présente invention, ladite borne de commande du premier transistor est reliée directement à ladite borne d'application du premier potentiel de la tension d'alimentation.

Selon un mode de réalisation de la présente invention, un premier élément résistif secondaire relie ladite borne d'application du premier potentiel de la tension d'alimentation à la borne de commande du premier transistor.

Selon un mode de réalisation de la présente invention, un deuxième élément résistif secondaire relie ladite borne de commande du premier transistor au potentiel de référence de la tension d'alimentation.

Selon un mode de réalisation de la présente invention, le circuit comporte un deuxième transistor de type opposé au premier pour constituer un détecteur de pics parasites bidirectionnel, les bornes de commande respectives des deux transistors étant reliées ensemble à ladite borne d'application du premier potentiel de la tension d'alimentation.

Selon un mode de réalisation de la présente invention, le deuxième transistor est connecté en parallèle sur le premier.

Selon un mode de réalisation de la présente invention, le deuxième transistor a sa première borne de conduction reliée à une première électrode d'un deuxième élément capacitif dont l'autre électrode est reliée à ladite borne d'application du potentiel de référence, chaque transistor étant associé à un premier élément résistif de valeur différente.

Selon un mode de réalisation de la présente invention, ledit premier transistor est un transistor MOS.

Selon un mode de réalisation de la présente invention, ledit premier transistor est un transistor bipolaire.

Selon un mode de réalisation de la présente invention, les premier et deuxième potentiels sont identiques.

Selon un mode de réalisation de la présente invention, les éléments résistifs et/ou capacitifs sont choisis en fonction de l'amplitude et de la durée minimale des pics à détecter.

L'invention prévoit également un circuit électronique comportant un détecteur de pics parasites sur son alimentation.

L'invention prévoit également une carte à puce, un décodeur électronique, un lecteur de carte, un circuit de chiffrement/déchiffrement comportant un détecteur de pics parasites.

Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

la figure 1 qui a décrite précédemment représente une carte à puce du type auquel s'applique à titre d'exemple la présente invention ;

la figure 2 qui a décrite précédemment représente un système de décodeur de signaux de télévision du type auquel s'applique à titre d'exemple la présente invention ;

la figure 3 qui a été décrite précédemment représente, de façon très schématique et sous forme de blocs, un exemple de circuit intégré du type auquel s'applique la présente invention ;

la figure 4 qui a été décrite précédemment représente un exemple classique de détecteur de pics parasites ;

la figure 5 représente, de façon très schématique et sous forme de blocs, un mode de réalisation d'un détecteur de pics parasites selon la présente invention ;

la figure 6 illustre le fonctionnement du détecteur de la figure 5 ;

la figure 7 représente le schéma électrique détaillé d'un premier mode de réalisation d'un détecteur de pics parasites négatifs selon la présente invention ;

la figure 8 représente le schéma électrique détaillé d'un premier mode de réalisation d'un détecteur de pics parasites positifs selon la présente invention ;

la figure 9 représente un mode de réalisation d'un détecteur de pics parasites positifs et négatifs selon la présente invention ;

la figure 10 représente un autre mode de réalisation d'un détecteur de pics parasites positifs et négatifs selon la présente invention ;

la figure 11 représente un deuxième mode de réalisation d'un détecteur de pics parasites négatifs selon la présente invention ;

la figure 12 représente un troisième mode de réalisation d'un détecteur de pics parasites négatifs selon la présente invention ;

la figure 13 représente un quatrième mode de réalisation d'un détecteur de pics parasites négatifs selon la présente invention ;

la figure 14 représente un cinquième mode de réalisation d'un détecteur de pics parasites négatifs selon la présente invention ;

la figure 15 représente un sixième mode de réalisation d'un détecteur de pics parasites négatifs selon la présente invention ;

la figure 16 représente un mode de réalisation à transistor bipolaire d'un détecteur de pics parasites négatifs selon la présente invention ; et

la figure 17 représente un mode de réalisation à transistor bipolaire d'un détecteur de pics parasites positifs selon la présente invention.

De mêmes éléments ont été désignés par les mêmes références aux différentes figures. Pour des raisons de clarté, seuls les éléments qui sont utiles à la compréhension de l'invention ont été représentés aux figures et seront décrits par la suite. En particulier, l'exploitation du signal de détection d'un pic parasite n'a pas été détaillée, l'invention étant compatible avec toute exploitation classique d'un tel signal de détection.

Description détaillée

Une caractéristique d'un aspect de la présente invention est de comparer directement une information proportionnelle mais non filtrée de la tension d'alimentation du circuit par rapport à un seuil, ce seuil étant de préférence auto-adaptatif en fonction de cette tension d'alimentation.

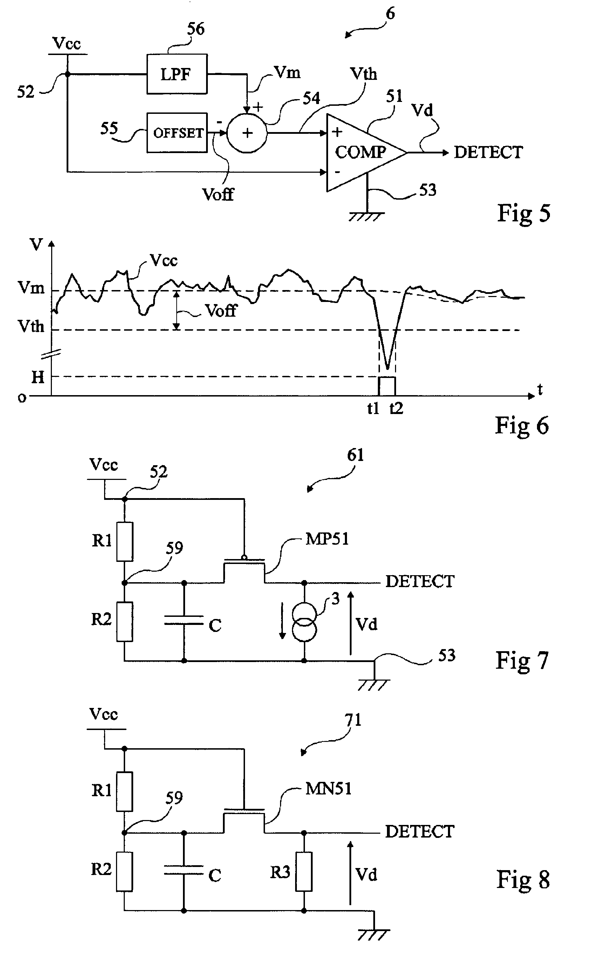

La figure 5 représente, de façon très schématique et sous forme de blocs, un schéma fonctionnel d'un mode de réalisation d'un détecteur de pics parasites négatifs selon la présente invention.

Un élément de comparaison 51 (COMP) compare la tension Vcc appliquée entre une borne positive 52 et une borne de masse 53 par rapport à une tension seuil Vth. Le résultat fourni par le comparateur 51 est le signal de détection DETECT exploitable, comme on le verra par la suite, préférentiellement sous la forme d'un signal de tension Vd. La tension Vth correspond de préférence à une valeur moyenne Vm de la tension Vcc minorée d'une tension de décalage Voff. Fonctionnellement, un additionneur 54 soustrait la tension Voff fournie par un bloc 55 (OFFSET) à la tension moyenne Vm fournie par un filtre passe-bas 56 (LPF) recevant la tension Vcc.

Un avantage de la présente invention qui ressort déjà du schéma fonctionnel de la figure 5 est sa capacité à détecter des pics de faible durée grâce à la comparaison directe du signal Vcc qui dans ce mode de réalisation n'est pas filtré.

La figure 6 illustre, par un chronogramme, le fonctionnement du circuit de la figure 5. Cette figure représente un exemple d'allure de la tension Vcc à partir de laquelle est calculée la valeur moyenne Vm et la tension seuil Vth (inférieure à la valeur Vm pour un détecteur de pics négatifs). La tension Vcc est généralement bruitée par différents parasites, par exemple, les commutations opérées par le circuit qu'elle alimente. Le choix de la tension Voff conditionne l'amplitude des pics parasites pris en compte par le détecteur. Dans l'exemple de la figure 6, on suppose qu'à un instant t1, un pic parasite négatif d'amplitude suffisante dépasse le seuil Vth. Cela provoque alors un basculement de la sortie du comparateur 51. Dans cet exemple, on suppose une tension Vd à l'état haut (H) en présence d'un pic parasite. La présence du pic peut elle-même suffire à diminuer légèrement la valeur moyenne. La durée d'état haut du signal de détection Vd dépend de la durée du pic. Si nécessaire, un élément de mémorisation (non représenté) de l'activation du signal DETECT est prévu.

Selon un mode de réalisation préféré de la présente invention, l'élément de comparaison 51 est constitué d'un simple transistor MOS. Plus généralement, il pourra s'agir de n'importe quel type de transistor (bipolaire, FET etc.).

La figure 7 représente un premier mode de réalisation d'un circuit 61 de détection selon l'invention. Le comparateur 51 est, pour un détecteur de pics négatifs sur une tension Vcc positive, constitué d'un transistor MOS MP51 à canal P. La grille du transistor MP51 est reliée directement à la borne 52 d'application de la tension Vcc. Un pont diviseur constitué dans cet exemple de deux éléments résistifs R1 et R2 en série entre les bornes 52 et 53 a son point milieu 59 relié à la source du transistor MP51, un élément capacitif C reliant ce point milieu 59 à la masse 53. Fonctionnellement, le point 59 correspond à la sortie du filtre passe-bas 56 (figure 5) tandis que la grille du transistor MP51 représente l'entrée inverseuse (-) du comparateur 51. Enfin, une source de courant 3 relie de préférence le drain du transistor MP51 à la masse. La tension Vd aux bornes de cette source de courant représente le signal de détection DETECT. Ce signal en tout ou rien est facilement exploitable par un circuit ou système comme un signal numérique indicateur d'une tentative d'attaque.

La constante de temps du filtre passe-bas est déterminée par le produit de la résistance R1 par le condensateur C (fréquence de coupure fc = 1/2πR1C).

Le décalage (Voff) par rapport au niveau moyenné (Vm) est, en première approximation, fixé par les résistances R1 et R2 et par la tension seuil du transistor MP51 (Voff = (R1.Vcc)/(R1+R2) + |Vt|, où |Vt| représente la valeur absolue de la tension seuil du transistor MP51).

Le transistor MP51 est passant lorsque la tension Vcc bruitée, diminuée de la valeur moyenne Vm fixée par les éléments R1 et C, devient supérieure ou égale à la valeur absolue de sa tension seuil Vt.

Dans le mode de réalisation de la figure 7, cette condition sur la conduction est réglable par la résistance R2. Plus la valeur de la résistance R2 augmente, plus la tension Voff est faible.

La source de courant 3 est constituée, par exemple, d'une simple résistance ou d'une source de courant active. On veillera cependant à ce que sa résistance équivalente soit supérieure à la valeur de la résistance R1 afin de ne pas absorber les pics parasites à détecter. L'objectif de la source de courant 3 est de fournir, à ses bornes, une tension (Vd) représentative de la détection en tirant une partie du courant vers la masse (pull-down).

Au repos, la consommation est limitée à la circulation dans le pont résistif R1, R2 dont les valeurs sont donc préférentiellement choisies suffisamment importantes (plusieurs dizaines de kilo ohms). Un compromis doit cependant être effectué entre la place disponible dans le circuit et la consommation au repos.

A titre d'exemple particulier de réalisation, un montage du type de celui illustré par la figure 7 pourra être réalisé avec des composants ayant des valeurs suivantes:

$$R1 = 100 \text{ k}\Omega \text{ ;}$$

$$R2 = 1 \text{ M}\Omega \text{ ;}$$

Source de courant active 3 d'un pA ; et

$$C = 3 \text{ pF.}$$

Un avantage de la présente invention est que le circuit de détection est particulièrement simple à réaliser. En particulier, le comparateur de l'invention est réduit à un transistor.

La figure 8 représente un premier mode de réalisation d'un circuit 71 de détection de pics parasites positifs par rapport à une tension Vcc positive selon la présente invention. La seule différence par rapport au montage de la figure 7 est le recours à un transistor MN51 à canal N au lieu d'un transistor à canal P. En figure 8, la source de courant 3 a été représentée sous la forme d'une résistance R3. Toutefois, une source de courant active 3 est préférée pour son gain de place par rapport à une résistance R3 de plusieurs centaines de kiloohms.

Pour un transistor à canal N, le décalage Voff par rapport à la valeur moyenne Vm devient, en première approximation : Voff = |Vt|-(R1.Vcc)/(R1+R2), où |Vt| représente la valeur absolue de la tension seuil du transistor MN51.

Pour simplifier, la résistance R3 (ou source de courant de sortie) n'est pas illustrée dans les figures suivantes. Cette source de courant active ou passive peut d'ailleurs être intégrée au circuit d'interprétation du résultat de la détection situé en aval du détecteur proprement dit.

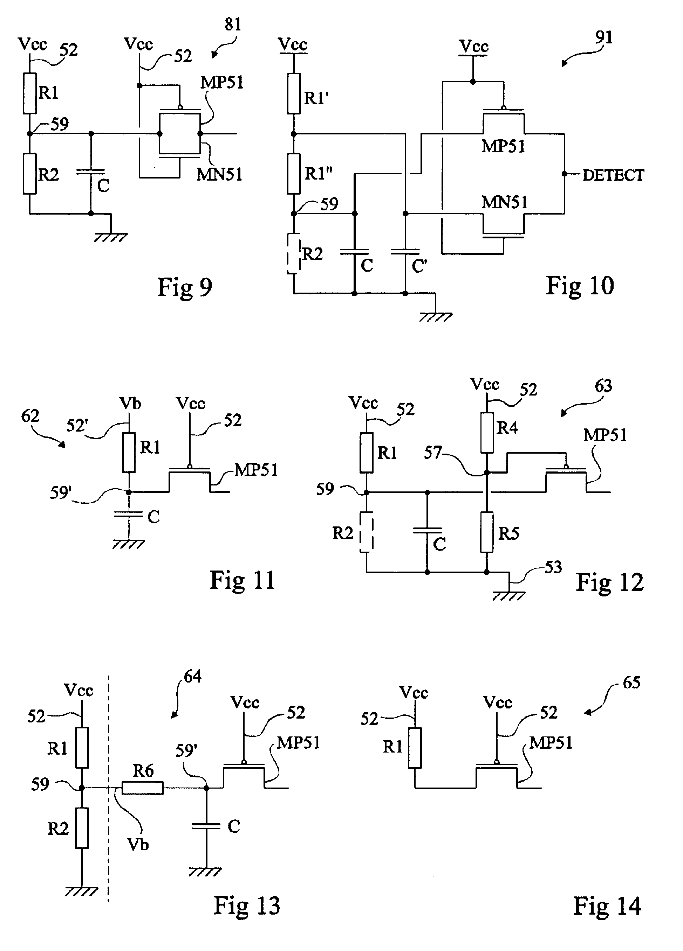

La figure 9 représente un mode de réalisation d'un détecteur 81 de pics parasites positifs et négatifs par rapport à une tension Vcc. Dans l'exemple de la figure 9, la réalisation d'un tel détecteur bidirectionnel est particulièrement simple car, dans la plupart des cas, on peut se contenter de seuils dissymétriques. Cela est en pratique le cas pour des circuits à régulateurs basés sur des transistors de puissance à canal N qui filtrent mieux les pics positifs que les pics négatifs. Il suffit alors de placer deux transistors MP51 à canal P et MN51 à canal N en parallèle (source du transistor MP51 et drain du transistor MN51 côté condensateur C) sans qu'il soit nécessaire de modifier les éléments (résistances R1, R2, condensateur C) utilisés pour établir la valeur moyenne et les seuils. Les grilles respectives des transistors MP51 et MN51 reçoivent, de préférence directement, la tension Vcc. Dans le montage de la figure 10, le décalage fixant le seuil de détection des pics négatifs par rapport à la valeur moyenne de la tension Vcc est inférieur au décalage fixant le seuil de détection des pics positifs par rapport à la même valeur moyenne de la tension Vcc.

La figure 10 représente un autre mode de réalisation d'un détecteur bidirectionnel 91 de pics parasites appliqué au cas où l'on souhaite avoir des seuils de détection symétriques (par exemple, dans le cas de circuits alimentés par des régulateurs moins efficaces que les régulateurs à transistors de puissance à canal N). Dans ce cas, il faut dissocier la source du transistor MP51 (reliée au condensateur C et au point milieu 59) du drain du transistor MN51. Un condensateur C' supplémentaire relie le drain du transistor MN51 au point milieu de deux résistances en série R1' et R1" remplaçant alors la résistance R1. Un dimensionnement approprié des résistances permet d'obtenir des seuils identiques de détection de pics négatifs et positifs.

On décrira par la suite différents modes de réalisation et variantes en relation avec un détecteur de pics parasites négatifs sur une tension d'alimentation positive. Tous ces modes de réalisation et variantes s'appliquent également à des détecteurs de pics positifs en remplaçant le type de canal du transistor comme en figure 8 et à des détecteurs bidirectionnels en associant deux transistors de type de canal différent, de préférence, comme en figure 9.

La figure 11 représente un deuxième mode de réalisation 62 d'un détecteur de pics parasites négatifs selon l'invention. Par rapport au premier mode de réalisation (61, figure 7), la résistance R2 a été supprimée. Cela supprime toute consommation du détecteur au repos. Toutefois, cela limite le réglage potentiel de la tension de décalage Voff qui devient alors fonction de la valeur de la résistance R1 et de la tension seuil Vt du transistor MOS MP51, mais aussi de son rapport largeur/longueur de grille (W/L) et de la valeur de la source de courant de sortie (3, figure 7) dont les effets ne peuvent plus être négligés.

La figure 11 illustre également une variante de l'invention selon laquelle le potentiel appliqué sur la résistance R1 (borne 52') est une tension Vb différente de la tension Vcc. La grille du transistor MP51 reste reliée à la borne 52 recevant la tension Vcc bruitée. Par exemple, la tension Vb est une tension de polarisation fixe. Cet exemple ne constitue toutefois pas un mode de réalisation préféré dans la mesure où la tension moyenne Vm ne suit alors pas les éventuelles variations de la tension Vcc. Selon un autre exemple, la tension Vb est une tension différente de la tension Vcc tout en restant liée à cette dernière pour préserver le caractère auto-adaptatif du seuil de détection.

La figure 12 représente un troisième mode de réalisation d'un détecteur 63 de pics parasites négatifs selon l'invention. Un pont diviseur, constitué de deux éléments résistifs R4 et R5 en série entre la borne 52 et la masse 53, prélève une information (point milieu 57 du pont) proportionnelle à la tension Vcc pour son application sur la grille du transistor MP51. La résistance R4 effectue un filtrage avec la capacité de grille du transistor MP51 et est donc choisie avec une valeur relativement faible par rapport à la valeur de la résistance R1 afin de ne pas nuire à la détection. Plus la tension du point 57 est faible, plus le détecteur est sensible. Même avec ce filtrage qui rend le détecteur légèrement moins sensible, l'invention reste avantageuse par rapport au circuit connu (figure 4), notamment par la simplicité du comparateur.

Un avantage du mode de réalisation de la figure 12 est que le pont R4, R5 constitue un deuxième élément de réglage de la tension de décalage Voff par rapport à la valeur moyenne. Plus la valeur de la résistance R5 augmente par rapport à la valeur de la résistance R4, plus le seuil (VTh) s'écarte de la valeur moyenne Vm. Cela permet, par exemple, de s'affranchir de la résistance R2 (représentée en pointillés pour insister sur son caractère optionnel) sans perdre la possibilité de régler la valeur du décalage Voff. On réduit alors l'encombrement du détecteur, les résistances R4 et R5 étant de valeurs plus faibles que les résistances R1 et R2 et prenant donc moins de place. Par contre, cela engendre une consommation permanente légèrement plus importante du détecteur par rapport au mode de réalisation de la figure 7.

La figure 13 représente un quatrième mode de réalisation d'un détecteur 64 de pics parasites négatifs selon la présente invention. Une résistance additionnelle R6 est intercalée entre le point milieu 59 du pont diviseur des résistances R1 et R2 et la source 59' du transistor MP51. Le rôle de la résistance R6 est d'apporter un réglage supplémentaire pour le filtrage de la valeur moyenne Vm. Un tel mode de réalisation peut servir en particulier dans le cas où le point 59 est le point milieu d'un pont diviseur résistif utilisé à d'autres fins dans le circuit électronique. On peut ainsi partager un même pont diviseur avec d'autres applications (par exemple, avec le régulateur de tension), ce qui réduit l'encombrement. Fonctionnellement, cela revient à considérer que le point milieu 59 correspond à la borne 52' d'application de la tension Vb (figure 11) différente de la tension Vcc. Cette tension Vb reste toutefois ici proportionnelle à la tension Vcc, ce qui permet de préserver le caractère auto-adaptatif du seuil de détection.

La figure 14 représente un cinquième mode de réalisation d'un détecteur 65 de pics négatifs selon l'invention. Ce détecteur est ici représenté dans sa forme la plus simple où une résistance R1 est connectée entre la borne 52 d'application de la tension Vcc et la source du transistor MP51 dont la grille reçoit directement la tension Vcc. Dans ce mode de réalisation, la capacité parasite source-substrat du transistor MP51 joue le rôle du condensateur C.

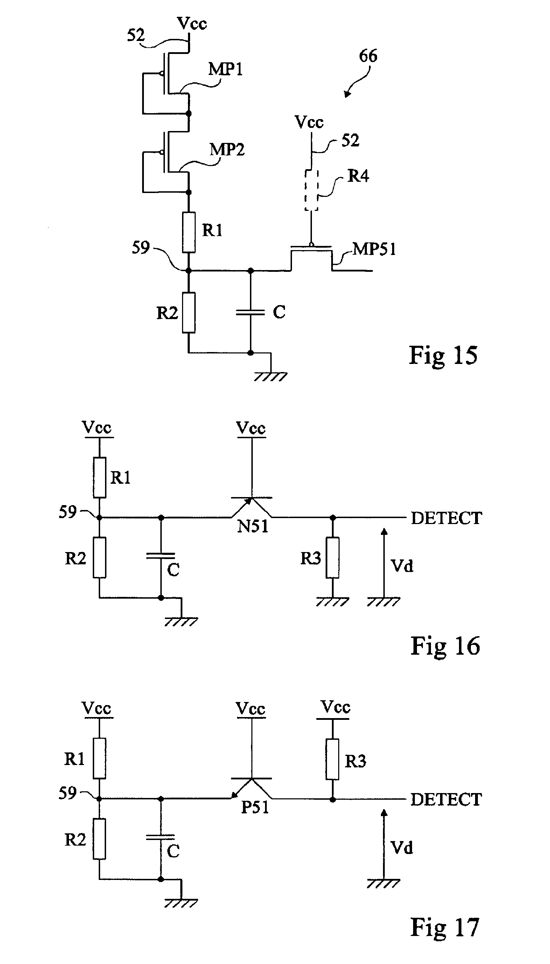

La figure 15 représente le schéma électrique d'un sixième mode de réalisation d'un détecteur 66 de pics négatifs selon la présente invention. Deux transistors MOS à canal P MP1 et MP2 sont montés en diode et en série entre la borne 52 et la résistance R1. Une telle structure permet de réduire la tension aux bornes du pont diviseur R1, R2, donc les valeurs de ces résistances et, par conséquent, leurs tailles.

La figure 15 illustre une autre variante selon laquelle une résistance R4 (en pointillés) relie la grille du transistor MP51 à la borne 52 d'application de la tension Vcc. Cette résistance R4 introduit un léger filtrage mais peut le cas échéant être prévue avec une valeur la plus faible possible, de façon à ne pas nuire à la bande passante du détecteur.

La figure 16 représente le schéma électrique d'un mode de réalisation de l'invention adapté à l'utilisation d'un transistor bipolaire N51 pour réaliser un détecteur de pics parasites négatifs. Par rapport au mode de réalisation de la figure 7, la seule différence est le remplacement du transistor MP51 par un transistor PNP dont l'émetteur est relié au point 59, dont le collecteur fournit le signal DETECT (aux bornes d'un élément par exemple résistif R3 de tirage du potentiel de sortie vers le bas) et dont la base est reliée à la borne 52 d'application de la tension Vcc. Le décalage Voff par rapport à la valeur moyenne Vm de la tension Vcc dépend, en première approximation, du rapport VccR1/(R1+R2) et de la chute de tension base-émetteur Vbe du transistor bipolaire.

La figure 17 représente un autre mode de réalisation à transistor bipolaire P51 pour détecter des pics positifs. Par rapport au montage de la figure 8, le transistor MN51 est remplacé par un transistor NPN dont l'émetteur est relié au point 59, dont la base reçoit la tension Vcc et dont le collecteur fournit le signal de détection. Par rapport au détecteur négatif, il faut (dans le cas du bipolaire) prévoir une source courant (par exemple, la résistance R3) tirant la sortie vers le potentiel Vcc.

Un avantage de la présente invention est qu'elle permet une détection de pics parasites de façon simple et fiable.

Un autre avantage de la présente invention est qu'elle permet de réutiliser des éléments présents à d'autres endroits du circuit électronique (notamment les ponts diviseurs résistifs).

Un autre avantage de la présente invention est qu'elle est compatible avec toute exploitation classique d'un signal de détection de perturbation par pic parasite sur l'alimentation d'un circuit électronique.

Bien entendu, la présente invention est susceptible de diverses variantes et modifications, dans le cadre des revendications, qui apparaîtront à l'homme de l'art. En particulier, bien que les différents modes de réalisation aient été décrits en relation avec une application à la détection de pics sur une alimentation positive, il s'agit d'une convention de signe arbitraire.

De plus, les différents modes de réalisations et variantes sont combinables (y compris en mixant les familles de transistors) et les dimensions à donner aux différentes résistances et capacités sont à la portée de l'homme du métier à partir des indications fonctionnelles données ci-dessus et de l'application. Les éléments résistifs (en principe des résistances intégrées) pourront si besoin être réalisés par des transistors MOS.

En outre, l'invention s'applique également à des circuits intégrés montés directement sur des cartes électroniques. Par exemple, le détecteur peut être situé côté lecteur de carte dans la mesure où le signal d'alimentation provient de ce lecteur, que ce soit avec ou sans contact.

## Revendications

1. Circuit de détection de pics parasites sur l'alimentation d'un circuit électronique (1), comportant au moins un premier transistor (MP51, MN51, N51, P51) dont la borne de commande est reliée à une borne (52) d'application d'un premier potentiel d'une tension d'alimentation (Vcc) du circuit et dont une première borne de conduction est reliée à une borne (52, 52') d'application d'un deuxième potentiel (Vb, Vcc) par l'intermédiaire d'au moins un premier élément résistif (R1), **caractérisé en ce que** la deuxième borne de conduction du premier transistor fournit le résultat (Vd) de la détection.

2. Circuit selon la revendication 1, dans lequel un premier élément capacitif (C) relie ladite première borne de conduction à une borne (53) d'application d'un potentiel de référence de la tension d'alimentation (Vcc), les valeurs respectives du premier élément résistif (R1) et du premier élément capacitif étant choisies en fonction de la durée minimale des pics parasites à détecter.

**3.** Circuit selon l'une quelconque des revendications 1 et 2, dans lequel un deuxième élément résistif (R2) forme, avec ledit premier élément résistif (R1), un pont diviseur de tension dont une borne intermédiaire (59) est connectée à ladite première borne de conduction du premier transistor (MP51, MN51, N51, P51).

**4.** Circuit selon la revendication 3 dans son rattachement à la revendication 2, dans lequel un troisième élément résistif (R6) relie ladite borne intermédiaire (59) à la première borne de conduction du premier transistor (MP51, MN51, N51, P51).

**5.** Circuit selon l'une quelconque des revendications 1 à 4, dans lequel ladite borne de commande du premier transistor (MP51, MN51, N51, P51) est reliée directement à ladite borne (52) d'application du premier potentiel de la tension d'alimentation (Vcc).

**6.** Circuit selon l'une quelconque des revendications 1 à 4, dans lequel un premier élément résistif secondaire (R4) relie ladite borne (52) d'application du premier potentiel de la tension d'alimentation (Vcc) à la borne de commande du premier transistor (MP51, MN51, N51, P51).

**7.** Circuit selon la revendication 6, dans lequel un deuxième élément résistif secondaire (R5) relie ladite borne de commande du premier transistor (MP51, MN51, N51, P51) au potentiel de référence de la tension d'alimentation (Vcc).

**8.** Circuit selon l'une quelconque des revendications 1 à 7, comportant un deuxième transistor (MN51, P51) de type de conductivité opposé au premier (MP51, N51) pour constituer un détecteur de pics parasites bidirectionnel, les bornes de commande respectives des deux transistors étant reliées ensemble à ladite borne (52) d'application du premier potentiel de la tension d'alimentation (Vcc).

**9.** Circuit selon la revendication 8, dans lequel le deuxième transistor (MN51) est connecté en parallèle sur le premier (MP51).

**10.** Circuit selon la revendication 8 dans son rattachement à la revendication 2, dans lequel le deuxième transistor (MN51, P51) a sa première borne de conduction reliée à une première électrode d'un deuxième élément capacitif (C') dont l'autre électrode est reliée à ladite borne (53) d'application du potentiel de référence, chaque transistor étant associé à un premier élément résistif de valeur différente.

**11.** Circuit selon l'une quelconque des revendications 1 à 10, dans lequel ledit premier transistor (MP51) est un transistor MOS (MP51, MN51).

**12.** Circuit selon l'une quelconque des revendications 1 à 10, dans lequel ledit premier transistor est un transistor bipolaire (N51, P51).

**13.** Circuit selon l'une quelconque des revendications 1 à 12, dans lequel les premier et deuxième potentiels sont identiques.

**14.** Circuit selon l'une quelconque des revendications 1 à 13, dans lequel les éléments résistifs et/ou capacitifs sont choisis en fonction de l'amplitude et de la durée minimale des pics à détecter.

**15.** Circuit électronique comportant un détecteur de pics parasites sur son alimentation, **caractérisé en ce que** le détecteur est conforme à l'une quelconque des revendications 1 à 14.

**Claims**

**1.** A circuit for detecting noise peaks on the power supply of an electronic circuit (1), comprising at least a first transistor (MP51, MN51, N51, P51) having its control terminal connected to a terminal (52) of application of a first potential of a supply voltage (Vcc) of the circuit and having a first conduction terminal (52, 52') connected to a terminal of application of a second potential (Vb, Vcc) via at least one first resistive element (R1), **characterized in that** the second conduction terminal of the first transistor provides the result (Vd) of the detection.

**2.** The circuit of claim 1, wherein a first capacitive element (C) connects said first conduction terminal to a terminal (53) of application of a reference potential of the power supply voltage (Vcc), the respective values of the first resistive element (R1) and of the first capacitive element being selected according to the minimum duration of the noise peaks to be detected.

**3.** The circuit of claim 1 or 2, wherein a second resistive element (R2) forms, with said first resistive element (R1), a voltage-dividing bridge having an intermediary terminal (59) connected to said first conduction terminal of the first transistor (MP51, MN51, N51, P51).

**4.** The circuit of claim 3 as attached to claim 2, wherein a third resistive element (R6) connects said intermediary terminal (59) to the first conduction terminal of the first transistor (MP51, MN51, N51, P51).

**5.** The circuit of any of claims 1 to 4, wherein said control terminal of the first transistor (MP51, MN51, N51, P51) is directly connected to said terminal (52) of application of the first potential of the power supply voltage (Vcc).

6. The circuit of any of claims 1 to 4, wherein a first secondary resistive element (R4) connects said terminal (52) of application of the first potential of the supply voltage (Vcc) to the control terminal of the first transistor (MP51, MN51, N51, P51).

7. The circuit of claim 6, wherein a second secondary resistive element (R5) connects said control terminal of the first transistor (MP51, MN51, N51, P51) to the reference potential of the supply voltage (Vcc).

8. The circuit of any of claims 1 to 7, comprising a second transistor (MN51, P51) of a conductivity type opposite to the first one (MP51, N51) to form a bi-directional noise peak detector, the respective control terminals of the two transistors being connected together to said terminal (52) of application of the first potential of the supply voltage (Vcc).

9. The circuit of claim 8, wherein the second transistor (MN51) is connected in parallel on the first one (MP51).

10. The circuit of claim 8 as attached to claim 2, wherein the second transistor (MN51, P51) has its first conduction terminal connected to a first electrode of a second capacitive element (C') having its other electrode connected to said terminal (53) of application of the reference potential, each transistor being associated with a first resistive element of different value.

11. The circuit of any of claims 1 to 10, wherein said first transistor (MP51) is a MOS transistor (MP51, MN51).

12. The circuit of any of claims 1 to 10, wherein said first transistor is a bipolar transistor (N51, P51).

13. The circuit of any of claims 1 to 12, wherein the first and second potentials are identical.

14. The circuit of any of claims 1 to 13, wherein the resistive and/or capacitive elements are selected according to the amplitude and to the minimum duration of the peaks to be detected.

15. An electronic circuit comprising a detector of noise peaks on its power supply, **characterized in that** the detector is that of any of claims 1 to 14.

**Patentansprüche**

1. Eine Schaltung zum Detektieren von Störungs- oder Rauschspitzen einer Leistungsversorgung einer elektronischen Schaltung (1), wobei folgendes vorgesehen ist:

   mindestens ein erster Transistor (MP51, MN51, N51, P51) dessen Steueranschluss mit einem Anschluss (52) einer Anwendung eines ersten Potentials einer Versorgungsspannung (Vcc) der Schaltung verbunden ist und der einen ersten Leitungsanschluss (52, 52') aufweist, verbunden mit einem Anwendungsanschluss eines zweiten Potentials (Vb, Vcc) über mindestens ein erstes Widerstandselement (R1), **dadurch gekennzeichnet, dass** der zweite Leitungsanschluss des ersten Transistors das Resultat (Vd) der Detektion liefert.

2. Die Schaltung nach Anspruch 1, wobei ein erstes kapazitives Element (C) den ersten Leitungsanschluss mit einem Anwendungsanschluss (53) eines Bezugspotentials der Leistungsversorgungsspannung (Vcc) verbindet, wobei die entsprechenden Werte des ersten Widerstandselements (R1) und des ersten kapazitiven Elements gemäß der Minimaldauer der zu detektierenden Rauschspitzen ausgewählt werden.

3. Die Schaltung nach Anspruch 1 oder 2, wobei ein zweites Widerstandselement (R2) mit dem ersten Widerstandselement (R1) eine Spannungsteilerbrücke formt, die einen Zwischenanschluss (59) besitzt, der mit dem erwähnten ersten Verbindungsanschluss des ersten Transistors (MP51, MN51, N51, P51) verbunden ist.

4. Die Schaltung nach Anspruch 3 in Verbindung mit Anspruch 2, wobei ein drittes Widerstandselement (R6) den Zwischenanschluss (59) mit dem ersten Leitungsanschluss des ersten Transistors (MP51, MN51, N51, P51) verbindet.

5. Die Schaltung nach einem der Ansprüche 1 bis 4, wobei der erwähnte Steueranschluss des ersten Transistors (MP51, MN51, N51, P51) direkt mit dem Anwendungsanschluss (52) des ersten Potentials der Leistungsversorgungsspannung (Vcc) verbunden ist.

6. Die Schaltung nach einem der Ansprüche 1 bis 4, wobei ein sekundäres Widerstandselement (R4) den Anwendungsanschluss (52) des ersten Potentials der Versorgungsspannung (Vcc) mit dem Steueranschluss des ersten Transistors (MP51, MN51, N51, P51) verbindet.

**7.** Die Schaltung nach Anspruch 6, wobei ein zweites Widerstandselement (R5) den Steueranschluss des ersten Transistors (MP51, MN51, N51, P51) mit dem Bezugspotential der Versorgungsspannung (Vcc) verbindet.

**8.** Die Schaltung nach einem der Ansprüche 1 bis 7, wobei ein zweiter Transistor (MN51, P51) eines Leitfähigkeitstyps entgegengesetzt zum ersten (MP51, N51) vorgesehen ist, um einen bi-direktionellen Rauschspitzendetektor zu bilden, wobei die entsprechenden Steueranschlüsse der zwei Transistoren miteinander mit dem Anwendungsanschluss (52) des ersten Potentials der Versorgungsspannung (Vcc) verbunden sind.

**9.** Die Schaltung nach Anspruch 8, wobei der zweite Transistor (MN51) parallel mit dem ersten Transistor (MP51) geschaltet ist.

**10.** Die Schaltung nach Anspruch 8 in Verbindung mit Anspruch 2, wobei der zweite Transistor (MN51, P51) mit seinem ersten Leitungsanschluss mit einer ersten Elektrode eines zweiten kapazitiven Elements (C') verbunden ist, welches seine andere Elektrode mit dem Anwendungsanschluss (53) des Bezugspotentials verbunden hat, wobei jeder Transistor mit einem ersten Widerstandselement von unterschiedlichem Wert assoziiert bzw. verbunden ist.

**11.** Die Schaltung nach einem der Ansprüche 1 bis 10, wobei der erste Transistor (MP51) ein MOS-Transistor (MP51, MN51) ist.

**12.** Die Schaltung nach einem der Ansprüche 1 bis 10, wobei der erste Transistor ein Bipolartransistor (N51, P51) ist.

**13.** Die Schaltung nach einem der Ansprüche 1 bis 12, wobei die ersten und zweiten Potentiale identisch sind.

**14.** Die Schaltung nach einem der Ansprüche 1 bis 13, wobei die Widerstands- und/oder kapazitiven Elemente ausgewählt werden, entsprechend der Amplitude und der minimalen Dauer der zu detektierenden Spitzen.

**15.** Eine elektronische Schaltung, die einen Detektor für Rauschspitzen an ihrer Leistungsversorgung aufweist, **dadurch gekennzeichnet, dass** der Detektor gemäß irgendeinem der Ansprüche 1 bis 14 ausgebildet ist.

Fig 1

Fig 2

Fig 3

Fig 4

Fig 5

Fig 6

Fig 7

Fig 8

Fig 9

Fig 10

Fig 11

Fig 12

Fig 13

Fig 14

Fig 15

Fig 16

Fig 17

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20030226082 A
- DE 10120147 A
- US 6751079 B
- WO 9850859 A
- EP 1293856 A